Europäisches Patentamt

European Patent Office

Office européen des brevets

(19)

(11) Publication number: **0 306 820**
**A1**

## (12) EUROPEAN PATENT APPLICATION

(21) Application number: **88114217.8**

(22) Date of filing: **31.08.88**

(51) Int. Cl.⁴ **B65D 41/04**

(30) Priority: **04.09.87 US 93221**

(43) Date of publication of application:
**15.03.89 Bulletin 89/11**

(84) Designated Contracting States:
**AT BE CH DE ES FR GB GR IT LI LU NL SE**

(71) Applicant: **CONTINENTAL WHITE CAP, INC.**
**Tri State Center 2215 Sanders Road**
**Northbrook Illinois 60062(US)**

(72) Inventor: **Moloney, John J.**
**1224 Olympus Drive**
**Naperville Illinois 60540(US)**
Inventor: **Kehe, Alfred W.**
**1517 Atwood Avenue**
**Berkeley Illinois 60163(US)**

(74) Representative: **Baillie, Iain Cameron et al**
**c/o Ladas & Parry Isartorplatz 5**
**D-8000 München 2(DE)**

(54) **Low oxygen, barrier type plastic closure and method of forming same.**

(57) A multilayer plastic barrier insert (30) for use in combination with an injection molded plastic closure (38). The barrier insert includes a central plastic material layer (12) having gas and liquid barrier properties sandwiched between two outer layers (14,16) one of which (14) is heat bondable to the hot plastic material from which a closure member is formed during the injection molding of such closure member. The other outside layer (16) of the barrier insert is formed of a material over which the customary plastisol gasket (52) can be fused and bonded. The barrier insert is such that the composite closure will provide a hermetic seal with a container under hot fill and retort conditions.

EP 0 306 820 A1

## LOW OXYGEN, BARRIER TYPE PLASTIC CLOSURE AND METHOD OF FORMING SAME

This invention relates to a multilayer plastic composite closure for a bottled or like container which includes a plastic closure molded and adhered simultaneously to a multilayer plastic barrier insert on which a conventional plastisol gasketing compound may be lined and/or molded and fused to provide a hermetic container seal. Most particularly, this invention relates to the provision of a lidded, lugged, or threaded type composite closure for vacuum or pressure type products requiring very low orders of gas and/or liquid permeation with a functional hermetic seal.

Some closures of conventional construction posses an inner sealing liner. The liner element may be characterized by having a laminated structure comprising a backing or cushion layer of surface absorbing cork, cellulose or paper-like membrane or substrate having an inner face which may be bonded to the interior top surface of a closure and having an outer face which is surface bonded to a barrier layer of pliant polymeric or metallic foil material. The barrier material possesses the properties of being essentially impermeable to water vapor and gases so as to be suitable for closures utilized in conjunction with containers for packaging food products and beverages with generally little or no vacuum.

Although polyethylene and polypropylene homopolymers and copolymers are being used quite extensively in the manufacture of closures for containers, their functional performance characteristics in regard to low order gas permeation is at best marginal and in most cases inadequate.

So called "linerless" plastic closures have been developed in which integral annular flanges have been incorporated into the closures to seal on the inner and/or outer finish of a container. The primary deficiencies of these types of closures are that they will not provide a reproducible hermetic seal on container finishes that possess wide tolerances and gas permeation properties are excessively high for many food products.

Another method which has been developed in forming gasket lined closures is a hot melt application of solid or foamed thermo-plastic compositions via spin-lining equipment. Although the resultant hot melt lined plastic closures may be applicable for dry and liquid seal packaged products, the generally low softening temperature of the hot melt material will not withstand pasteurization and retort temperature conditions to provide hermetically sealed products.

Water or solvent based elastomers may also be applied to molded plastic closures utilizing a spin-lining method. However, for gasket thicknesses of 0.015 to 0.060 inch, the wet annular gaskets require lengthy air drying and/or incremental bake cycles to eliminate water and solvent entrapment in the closure gasket compound.

In view of the foregoing, there is, therefore, a need in the plastic closure art for a plastic closure with functional performance characteristics in regard to very low orders of gas permeation, a hermetic sealing gasket, and cut-through resistance under hot fill and retort conditions. Additionally, the closure should provide long term shelf life and ease of opening to provide access to the packaged product.

In accordance with the present invention, there is provided for incorporation in an injected molded plastic closure a multilayer plastic barrier insert which is self bondable to a thermoplastic polyolefin when injected into a mold to form a closure. The barrier insert should also be of a construction which will receive a conventional plastisol gasketing compound.

Most particularly, in accordance with this invention there is provided an injection molded plastic closure having incorporated therein a multilayer plastic barrier insert which carries a plastisol gasket, which closure will provide a hermetic seal under hot fill and retort conditions.

With the above and other objects in view that will hereinafter appear, the nature of the invention will be more clearly understood by reference to the following detailed description, the appended claims, and the several views illustrated in the accompanying drawings.

Figure 1 is a sectional view taken through a multilayer plastic barrier insert formed in accordance with this invention.

Figure 2 is a schematic elevational view showing the manner in which the barrier insert may be made by coextrusion.

Figure 3 is another schematic elevational view showing the manner in which the barrier insert may be made by laminating webs.

Figure 4 is a schematic elevational view showing the die cutting of a barrier insert from a laminated web.

Figure 5 is an exploded elevational view with parts broken away and shown in section of an injection mold for forming a closure.

Figure 6 is an elevational view of the injection mold of Figure 5 with parts broken away and shown in section and shows the process of injection molding a plastic closure and simultaneously bonding the same to a barrier insert.

Figure 7 is an elevational view with parts broken away and shown in section and shows the spin-lining of the closure to form a plastisol gasket.

Figure 8 is a fragmentary vertical sectional view showing the manner in which the plastisol gasket is fused over the barrier insert by a dielectric heating method.

Before going into the details of the invention, the gas transmission rate of certain plastic materials should be noted. The $O_2$ gas transmission rates are based on the formula: (cc - mil/100 in. - 24 hours - atm @ 23 C.)

Vinylidene chloride/vinyl chloride copolymer 0.88

Ethylene vinyl alcohol copolymer     0.02

Polypropylene     175

High Density Polyethylene     120

In accordance with this invention, there is first provided a multilayer plastic barrier insert which is generally identified by the numeral 30. The barrier insert has an overall thickness from 0.007 to 0.016 inch and preferably includes a center barrier layer of a vinylidene chloride/vinyl chloride copolymer having a thickness ranging from 0.008 to 0.002 inch. The barrier layer 12 is sandwiched between two layers 14, 16 of polypropylene homopolymers and/or copolymers.

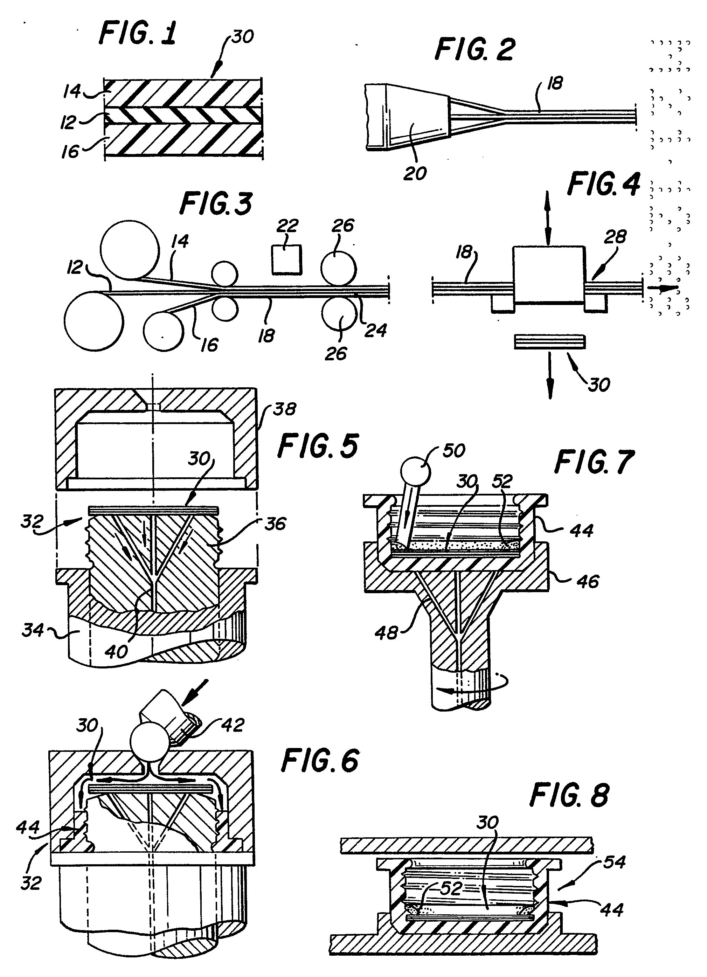

With reference to Figure 2, it will be seen that a multilayer web 18 may be formed by coextrusion utilizing an extruder 20. On the other hand, the multilayer web 18 may be formed by laminating together three separate webs 12, 14 and 16 in the manner shown in Figure 3. The three separate webs 12, 14 and 16 are supplied in individual rolls and are brought into face-to-face relation after which they are heated by way of a heater 22 and bonded together by passing through a nip 24 between a pair of rolls 26.

Referring now to Figure 4, it will be seen that by utilizing die punching equipment 28, multilayer plastic barrier inserts 30 may be formed from the multilayered web 18.

Referring now to Figure 5 in particular, it will be seen that there is illustrated the general details of a mold for injection molding a closure, the mold being generally identified by the numeral 32. The illustrated mold 32 is a single cavity mold and includes a support 34 which carries a male insert 36. The mold also includes a female cavity defining mold member 38.

In order that a barrier insert 30 may be maintained within the mold 32 in proper position during the injection molding of the closure, the male mold member 36 is provided with vacuum passages 40 which open through the upper end of the male mold member 36. When a vacuum is drawn through the passages 40 and a barrier insert 30 is seated on the end of the male mold member 36, as is shown in Figure 5, the barrier insert 30 is held in place ready for a closure to be injection molded within the mold 32 as is best shown in Figure 6.

Hot polypropylene extrudate is injected into the mold 32 utilizing an extrusion nozzle 42 as is best shown in Figure 6. During this time the barrier insert 30 remains in place and the exposed surface layer 14 is simultaneously heat bonded with the hot extrudate as a closure member 44 is formed.

As this time it is pointed out that the illustrated closure member 44 is provided with internal threads for securement to a container. However, as pointed out above, the closure may be of the lidded, lugged or threaded type for association with different types of neck finishes.

When the formation of the closure member 44 is completed, the mold 32 is opened and the composite closure member discharged therefrom.

At this time it is pointed out that the layer 16 is of a material which will receive a plastisol gasket.

Referring now to Figure 7, it will be seen that the composite closure member 44 will be mounted in a suitable holder 46 which is mounted for rotation. The holder 46 is preferably provided with vacuum passages 48 for retaining the composite closure member 44 within the holder as the holder rotates.

A plastisol gasket material dispenser 50 is associated with the holder 46 and serves to apply a plastisol gasket 52 to the layer 16 of the barrier insert 30. At this time it is pointed out that although the gasket 52 is of the spun-in type and thus generally annular in outline, it is to be understood that the gasket may also be one which is molded in place in a conventional manner.

The plastisol gaskets will have a thickness in the range of 0.035 to 0.060 inch.

Finally, the plastisol gasket 52 is fused over the layer 16 by utilizing dielectric heating apparatus 54 as is schematically illustrated in Figure 8.

Although only specific plastic materials have been defined hereinabove, it is to be understood that the invention is not specifically restricted to the stated plastic materials, all of which are conventionally utilized at the present. The invention relates in the provision of a barrier insert which is formed of plastic materials and is of multilayer construction having one outer layer which is bondable to the material of the closure member simultaneous with the injection molding of the closure member and having a second outer layer over which a selected gasket material is fused.

More specifically, although only a preferred embodiment of the invention has been specifically illustrated and described herein, it is to be understood that the barrier insert may be varied in accordance with the closure member which is to be injection molded and the gasket material which is to be applied thereto without departing from the spirit and scope of the invention as defined by the appended claims.

## Claims

1. A multilayer plastic barrier insert for use in combination with an injection molded plastic closure, said barrier insert comprising a central gas barrier plastic material layer and outer plastic layers, one of said outer plastic layers being formed of a plastic material heat bondable to a plastic closure during injection molding of said plastic closure, and the other of said outer plastic layers being formed of a plastic material over which a plastisol gasket is fused.

2. A barrier insert according to claim 1, wherein said gas barrier plastic material layer is selectively of a vinylidene chloride/vinyl chloride copolymer and ethylene vinyl alcohol copolymer type.

3. A barrier insert according to claim 1, wherein said gas barrier plastic material layer is selectively of a vinylidene chloride/vinyl chloride copolymer and ethylene vinyl alcohol copolymer type, and has a thickness ranging from 0.008 to 0.002 inch.

4. A barrier insert according to claim 1, wherein one of said outer plastic material layers is selectively formed of a polypropylene homopolymer and/or a polypropylene copolymer.

5. A barrier insert according to claim 1, wherein said gas barrier plastic material layer is selectively formed of a vinylidene chloride/vinyl chloride copolymer and ethylene vinyl alcohol copolymer type, and at least one of said plastic material layes is selectively formed of a polypropylene homopolymer and/or a polypropylene copolymer.

6. A barrier insert according to claim 1 wherein said insert has a thickness in the range of 0.007 to 0.016 inch.

7. A barrier insert according to claim 3 wherein said insert has a thickness in the range of 0.007 to 0.016 inch.

8. A barrier insert according to claim 1 wherein said barrier insert is part of an injection molded plastic closure of the type including an end panel.

9. A barrier insert according to claim 1 wherein said barrier insert is part of an injection molded plastic closure of the type including an end panel, and said one outer plastic layer is self heat bonded to said closure.

10. A combination according to claim 9 wherein at least said end panel of said closure is formed from a thermoplastic polyolefin.

11. A combination according to claim 8 wherein a plastisol gasket is carried by and fused over the other of said outer plastic layers.

12. A combination according to claim 11 wherein said plastisol gasket has a thickness in the range of 0.035 to 0.060 inch.

13. A method of forming a plastic material closure suitable for hot filling and retort conditions and having gas barrier properties, said method comprising the steps of providing a multilayer plastic barrier insert, placing the multilayer plastic barrier insert in an injection mold cavity for a plastic closure, injecting a molten plastic into said cavity to form a plastic closure and simultaneously heat bonding said molten plastic to said multilayer plastic barrier insert, removing said plastic closure and barrier insert from the mold cavity, and applying a plastisol gasket to said barrier insert.

14. A method according to claim 13 wherein said plastisol gasket is fused over said barrier insert by dielectric heating.

FIG. 1

FIG. 2

FIG.3

FIG.4

FIG.5

FIG. 7

FIG.6

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 239 238 (W.R.GRACE & CO.) <br> * Column 4, line 19 - column 7, line 38 * <br> --- | 1-14 | B 65 D 41/04 |
| A | GB-A-1 278 939 (KORK-N-SEAL LTD) <br> * Page 1, lines 31-75; figures * <br> ----- | 1,11 | |

TECHNICAL FIELDS
SEARCHED (Int. Cl.4)

B 65 D
B 29 C
B 32 B

The present search report has been drawn up for all claims

| Place of search | Date of completion of the search | Examiner |
|---|---|---|
| THE HAGUE | 07-12-1988 | CLARKE A.J. |